**Europäisches Patentamt**

**European Patent Office**

**Office européen des brevets**

(11) Veröffentlichungsnummer: **0 326 128 B1**

(12) # EUROPÄISCHE PATENTSCHRIFT

(45) Veröffentlichungstag der Patentschrift: **30.03.94**

(51) Int. Cl.⁵: **G01C 11/02**

(21) Anmeldenummer: **89101342.7**

(22) Anmeldetag: **26.01.89**

(54) Verfahren und Einrichtung zur Fernerkundung der Erde.

(30) Priorität: **26.01.88 DE 3802219**

(43) Veröffentlichungstag der Anmeldung:
**02.08.89 Patentblatt 89/31**

(45) Bekanntmachung des Hinweises auf die
Patenterteilung:
**30.03.94 Patentblatt 94/13**

(84) Benannte Vertragsstaaten:
**CH DE FR LI**

(56) Entgegenhaltungen:
**EP-A- 0 027 168**
**EP-A- 0 037 530**

**IGARSS' 86, August 1986, IEEE Katalog Nr.
86CH2268-1, Band 1, Seiten 21-28, ESA, Paris,
FR; O. HOFMANN: "The stereo-push-broom
scanner system DPS and its accuracy"**

(73) Patentinhaber: **Deutsche Forschungsanstalt
für Luft- und Raumfahrt
Linder Höhe
Postfach 90 60 58
D-51126 Köln(DE)**

Patentinhaber: **INGENIEURBÜRO BURKHARD
BRÄUMER
Buchendorfer-Strasse 74
D-82061 Neuried(DE)**

(72) Erfinder: **Drescher, Armin, Dipl.-Phys.
Krokus-Strasse 27a
D-8000 München 21(DE)**
Erfinder: **Bräumer, Burkhard, Dipl.-Ing. (FH)
Buchendorfer-Strasse 74
D-8027 Neuried bei München(DE)**

(74) Vertreter: **von Kirschbaum, Albrecht,
Dipl.-Ing.
Patentanwalt,
Postfach 15 20
D-82102 Germering (DE)**

EP 0 326 128 B1

**Beschreibung**

Die Erfindung betrifft ein Verfahren zur Fernerkundung der Erde nach dem Oberbegriff des Anspruchs 1 und Einrichtungen zu dessen Durchführung.

Zur Fernerkundung der Erde von Satelliten aus werden im optischen Spektralbereich überwiegend optoelektronische Linienabtaster eingesetzt. Hierbei wird eine Linie entweder mechanisch durch einen rotierenden Spiegel abgetastet, oder eine einzige Bildzeile wird simultan durch sogenannte Charged Coupled Devices, sogenannte CCD-Einheiten aufgenommen. Beispiele hierfür sind die Kameras des französischen Spot-Satelliten und auch des IRS-Satelliten (Indian Remote Sensing Satellite). CCD-Linienabtaster für den Shuttle- oder einen Satelliteneinsatz sind die von MBB hergestellten (stereoskopischen) Modularen Opto-Elektronischen Multispektral Scanner (die abgekürzt als MOMS bzw. Stereo-MOMS bezeichnet werden) und von der Anmelderin hergestellte MEOSS-Abtaster (Monocular Electro-Optical Stereo Scanner).

Bei allen bisher eingesetzten Linienabtastern entsteht durch die Vorwärtsbewegung des Kameraträgers in Form eines Satelliten oder eines Flugzeugs das Bild aus einzelnen Zeilen. Die daraus resultierenden, kontinuierlichen Bildstreifen sind daher geometrisch nicht steif. Sie werden durch die Dynamik des Trägers verzerrt, wobei sich durch Lageschwankungen und Abweichungen von der idealen, gradlinien Vorwärtsbewegung Fehlerquellen ergeben. Aus diesem Grund ist auch die geometrische Qualität der mittels Linienabtastern erhaltenen Bildern in keiner Weise zufriedenstellend.

Die Bildverzeichnungen können nur durch einen Vergleich mit fehlerfreien Bildern und Karten oder mit realen Positionen hervorstechender Bildmerkmale auf der Erdoberfläche ermittelt werden. Hierfür werden eine Vielzahl von Vergleichspunkten benötigt, deren Dichte den Amplituden und Frequenzen der Bildstörungen angepaßt sein muß.

Mit Hilfe von zweidimensional aufzeichnenden Kameras sind die mit solchen Kameras aufgenommenen, photographischen Bilder wegen der gleichzeitigen Aufnahme der ganzen Bildfläche zweidimensional steif. Hierbei läßt sich dann jeweils ein überlappendes Paar photographischer Aufnahmen stereoskopisch betrachten und entsprechend auswerten. Auf diese Weise wird nicht nur ein maßstäbliches Abbild (ein sogenanntes Modell) der aufgenommenen Oberfläche gewonnen, sondern gleichzeitig werden auch Ort und Winkelorientierung der beiden aufnehmenden Kameras relativ zur abgebildeten Oberfläche gleichzeitig mit ermittelt.

Für die zuletzt angeführte Aufgabe genügen die Bildpositionen von fünf nicht auf einer Linie liegenden Punkten im Überlappungsbereich des jeweils aufgenommenen Stereo-Bildpaares. Dies wird als die "Selbstorientierungsfähigkeit" solcher photographischer Kameras bezeichnet. Hierbei ist die genaue Kenntnis der invariablen Abbildungseigenschaften der Kamera Voraussetzung.

Die Selbstorientierungsfähigkeit photographischer Kameras wird in der Luftbild-Photogrammetrie genutzt, um große zusammenhängende Verbände aus sich überlappenden Einzelaufnahmen herzustellen. Durch die Benutzung von jeweils fünf oder mehr Vergleichspunkten pro Überlappungszone können dann alle Bilder zueinander und alle Kameras relativ zur wirklichen Erdoberfläche mit einem einheitlichen Maßstab orientiert werden. Dies wird dann als "Modell-Lösung" der "photogrammetrischen Blockausgleichung" in der Luftbild-Photogrammetrie bezeichnet.

Für eine solche "Modell-Lösung" genügt der Vergleich der Positionen identischer Bildpunkte im Bildraum (d.h. auf den einzelnen Photographien). Die wahren, tatsächlichen Bildkoordinaten dieser Punkte werden für die Modellbildung nicht benötigt. Es genügen jedoch die Bodenkoordinaten von nur vier Punkten (beispielsweise in den Ecken eines Blockes), um aus dem Modell (d.h. dem Block) Lage und Maßstab der realen Oberfläche und der realen Kamerastandorte zu ermitteln.

Zur Orientierung von optoelektronischen Linienabtastern bezüglich der Erdoberfläche werden in Flugzeugen jeweils parallel zu den Linienabtastern gelegentlich photographische Kameras eingesetzt. Hierbei ergeben sich jedoch Schwierigkeiten dadurch, daß sowohl digitale als auch analoge (photographische) Daten weiterverarbeitet werden müssen, und daß eine zeitliche Zuordnung der Bilddaten sowie eine hohe Bildfolgefrequenz für die photographischen Aufnahmen zur Erfassung der beispielsweise durch Erschütterung, Eigenschwingung u.ä. hervorgerufenen, hochfrequenten Trägerdynamik erforderlich sind.

Bei mit CCD-Flächensensoren versehenen Videokameras, die bisher im allgemeinen für Amateure konzipiert sind, weisen die Flächensensoren meistens 250 x 500 Rasterpunkte (Spalten und Zeilen) auf. Zum Zwecke einer Fernerkundung und Kartierung der Erde würden jedoch Kameras mit etwa 10.000 x 10.000 Rasterpunkte benötigt. Störungsfrei arbeitende, homogene Flächendetektoren dieser Größenordnung scheinen jedoch in absehbarer Zeit nicht möglich. Es ist daher versucht worden, Bildflächen mit der geforderten Rasterpunktzahl durch eine Mosaikanordnung kleinerer CCD-Flächendetektoren herzustellen.

Aus technischen Gründen, insbesondere wegen der Anzahl der Zuleitungen und der Signalabführung, kann eine solche Mosaikanordnung nicht lückenlos ausgebildet werden. Zur Abdeckung der Lücken muß daher mindestens eine weitere parallel ausgerichtete Kamera mit einem geeignet versetzten Mosaik verwendet werden.

Eine derartige Mosaikanordnung von kleinen opto-elektronischen Festkörper-Sensorflächen in photogrammetrischen Abbildungssystemen ist beispielsweise in der DE 34 28 325 beschrieben.

Das Hauptproblem großflächiger optpelektronischer Kameras liegt jedoch in der Datenübertragung. Um die Übertragungsrate konstant zu halten, muß der gesamte Bildinhalt bis zur nächsten Aufnahme gespeichert werden. Hierbei kommen als Speicher bisher nur die CCD-Einheiten selbst in Frage. Diese weisen jedoch ein verhältnismäßig hohes elektronisches Rauschen und Dunkelströme auf, so daß die Bildqualität unter den langen Speicherzeiten (von bis zu einer Minute) leidet.

Die mit sogenannten Flächenkameras hergestellten, einander überlappenden Aufnahmen erlauben eine stereoskopische Betrachtung und Vermessung des Geländes sowie die vorstehend beschriebene Modellbildung durch einen Blockausgleich für große Bildverbände; aus diesem Grund werden Flächenkameras in der topographischen Kartierung bevorzugt eingesetzt.

In wesentlich größerem Umfang als Flächenkameras werden jedoch wegen ihrer größeren radiometrischen Genauigkeit multispektrale bzw. panchromatisch arbeitende Linienabtaster eingesetzt, deren Echt- oder Falschfarbbilder eine thematische Klassifizierung der Oberfläche (beispielsweise hinsichtlich Bewuchs- oder Bodenarten) zulassen. Hierbei sollte jedoch eine möglichst einheitliche und sonnen-parallele Blickrichtung gegeben sein, weil sonst die Farbverhältnisse schattenabhängig, d.h. "blaustichig", sind.

Ferner hat die Tatsache, daß bei Flächenkameras die Blickrichtung auch in der Flugrichtung variiert, zu einer eindeutigen Bevorzugung von Linienabtastern für die multispektrale Kartierung geführt. Aus diesem Grund werden daher, wenn CCD-Flächensensoren für multispektrale Aufnahmen verwendet werden, diese bevorzugt in Prismen- oder Gitterspektrometern eingesetzt. Hierbei wird bei einer Einzelaufnahme, d.h. bei einer Belichtung nur eine Zeile auf der Erdoberfläche aufgenommen; diese einzige Zeile wird jedoch durch ein Prisma oder ein Gitter spektral zerlegt, so daß die spektrale Information auf verschiedene Zeilen des Flächen-CCDs verteilt wird. Das bedeutet, jede Zeile des Flächendetektors sieht daher eine andere "Farbe" der gleichen Zeile auf dem Erdboden.

Hinsichtlich der Entwicklung optoelektronischer Linienabtaster mit Stereo-Kapazität sind bereits eine Anzahl Vorschläge unterbreitet worden, um diesen Gerätetyp auch für die topographische Kartierung nutzbar zu machen. Beispiele hierfür sind die Kameras für ein mit Stereo-MOMS von MBB ausgestattetes Projekt und das bisher als einziges verwirklichte Projekt MEOSS der Anmelderin.

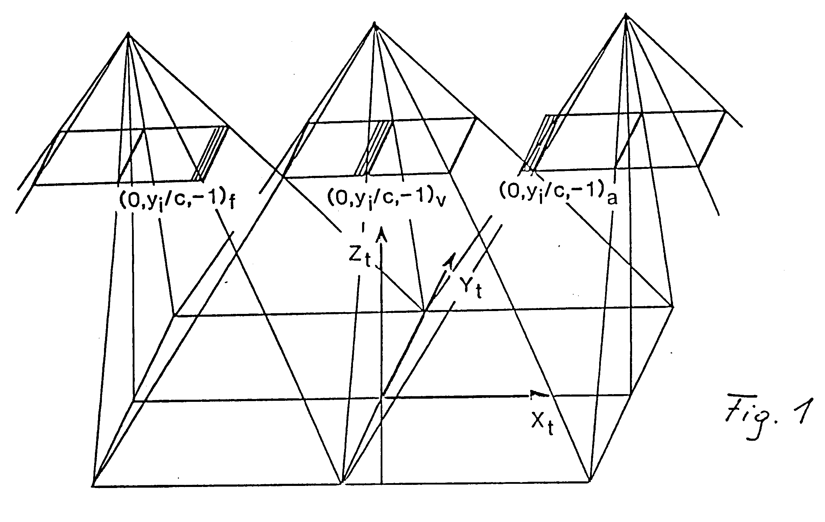

Hierbei müssen für stereoskopische Aufnahmen mindestens zwei gegeneinander geneigte Abtastebenen eingesetzt werden. Dies kann durch eine geneigte Anbringung einzelner Linienabtaster, beispielsweise von drei Einheiten bei Stereo-MOMS, oder durch Verwendung von parallel angeordneten CCD-Zeilendetektoren in der Bildebene einer Optik, wie beispielsweise bei dem MOESS-Projekt erfolgen. Damit eine gegenseitige Orientierung, ähnlich wie bei der photogrammetrischen Blockbildung aus Flächenaufnahmen möglich wird, müssen hierbei jedoch mindestens drei Abtastebenen verwendet werden, wie in Fig.1 schematisch dargestellt ist.

Hierbei besteht ein geometrisch steifes Einzelbild aus drei gleichzeitig belichteten, weit voneinander angeordneten Zeilen, die im Abstand einer sogenannten "Basislänge" B angeordnet sind. Ein derartiges Momentanbild wird "Zeilentripel" bezeichnet. Im Idealfall, d.h. bei idealen Flugverhältnissen, bei konstanter Flughöhe und -geschwindigkeit, bei einer senkrecht zum Erdboden ausgerichteten Kamera u.ä. überdecken sich dann zwei Zeilentripel, die jeweils im Abstand der Basislänge B angeordnet sind. Nur in einem solchen Idealfall lassen sich dann fünf gemeinsame Punkte auf je zwei übereinstimmenden Zeilen der beiden Zeilentripel finden.

Im allgemeinen lassen sich jedoch keine fünf gemeinsamen Punkte jedes Zeilentripels finden, weil sich die Bildpunkte eines Zeilentripels über einen bestimmten Bereich, ein sogenanntes zusammenhängendes Segment, von mehreren Zeilentripeln um den Abstand der Basislänge B verteilen. Die Zeilentripel können daher nicht mehr mathematisch eindeutig gegeneinander orientiert werden. Diese Schwierigkeiten sind zum Teil durch ein Hilfsmodell überwunden worden, das von MBB bei dessen Stereo-MOMS angewendet worden ist.

Benachbarte Zeilentripel können jedoch zu sogenannten "Segmenttripeln" zusammengefaßt werden. In einem solchen Fall lassen sich dann stets fünf oder mehr gemeinsame Bildpunkte für eine gegenseitige Orientierung der Segmenttripel im Abstand der Basislänge B finden.

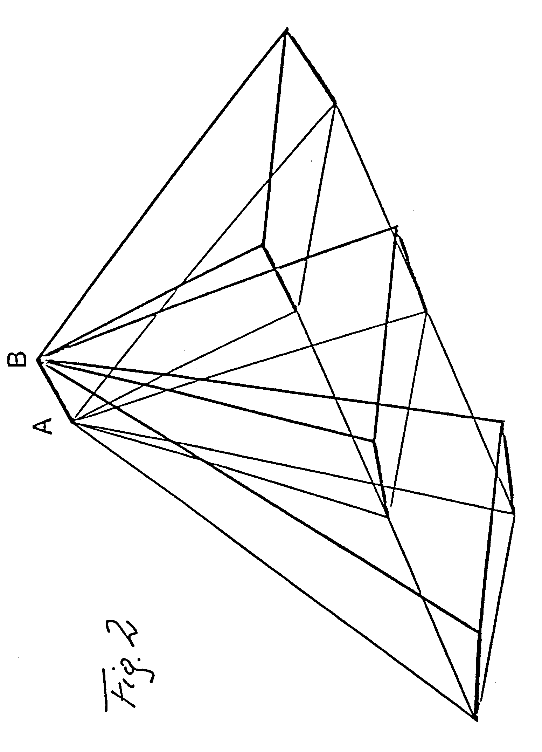

Weil jedoch Segmenttripel durch lineare oder nicht-lineare Interpolation zwischen zwei Zeilentripeln aus zu verschiedenen Zeitpunkten und bei verschiedenen Kamerapositionen und -ausrichtungen nacheinander belichteten Zeilentripeln gebildet werden, sind sie selbst schon durch Bahn- und Lageschwankungen des Kameraträgers, beispielsweise des Flugzeugs oder des Satelliten, verzerrt. Sie liegen dann beispielsweise nicht mehr in einer gemeinsamen Bildebene, wie in Fig.2 schematisch angedeutet ist, so daß sie dann auch bei fünf gemeinsamen Bildpunkten nicht mehr mathematisch eindeutig gegeneinander orientierbar sind.

Um jedoch für die Praxis eine begrenzte Selbstorientierungsfähigkeit zu erreichen, müssen verschiedene Aufnahmen oder Interpolationsmodelle verwendet werden. So wurden z.B. von der Anmelderin in deren MEOSS-Projekt satellitenspezifische, theoretische Modelle der Bahn- und Lagedynamik als Interpolationsmodelle entwickelt und eingesetzt.

Die bisher eingesetzten Verfahren und optoelektronischen Einrichtungen weisen jedoch verschiedene Nachteile auf. So ist bei den optoelektronischen Flächenkameras nachteilig, daß sich in Flugrichtung verschiedene Blickrichtungen ergeben, daß die vielen einzelnen Flächendetektoren in einem großen Mosaik justiert werden müssen, daß ferner zwei oder mehr parallel ausgerichtete Optiken, d.h. Kameras, für eine multispektrale Abbildung verwendet werden müssen, und daß ein kompletter Bildinhalt über eine verhältnismäßig lange Zeit zwischengespeichert werden muß.

Bei stereoskopischen Dreizeilen-Abtastern ist es nachteilig, daß Interpolationsmodelle erforderlich sind, daß eine für photogrammetrische Zwecke geschaffene Software für einen Blockausgleich erweitert werden muß, daß die Methode sehr empfindlich gegenüber einer hochfrequenten Trägerdynamik ist, daß ferner lange Bildstreifen erforderlich sind, um eine begrenzte Selbstausrichtung zu ermöglichen, oder eine Querbefliegung zweimal in verschiedenen Richtungen durchgeführt werden muß, und daß schließlich bei einer Schrägstellung der einzelnen Zeilen zueinander die Höhenauflösung bei einer Stereoauswertung nicht konstant ist.

Gemäß der Erfindung sollen daher ein Verfahren zur Fernerkundung der Erde sowie eine Einrichtung zur Durchführung des Verfahrens geschaffen werden, die die vorstehend angeführten Nachteile bisher entwickelter und eingesetzter Verfahren und Einrichtungen nicht mehr aufweisen, und bei welchen die Vorteile von multispektralen oder stereoskopischen Linienabtastern mit hoher Genauigkeit im Hinblick auf die Geometrie von Flächenkameras angewendet werden.

Gemäß der Erfindung ist dies bei einem Verfahren zur Fernerkundung der Erde nach dem Oberbegriff des Anspruchs 1 durch die im kennzeichnenden Teil des Anspruchs 1 angeführten Verfahrensschritte realisiert. Vorteilhafte Weiterbildungen des erfindungsgemäßen Verfahrens sind Gegenstand der Unteransprüche 2 bis 6. Ferner ist dies bei einer Einrichtung zur Durchführung des Verfahrens durch die Merkmale im kennzeichnenden Teil des Anspruchs 7 erreicht. Vorteilhafte Weiterbildungen der erfindungsgemäßen Einrichtung sind Gegenstand der Unteransprüche 8 und 9.

Gemäß der Erfindung sind ein oder mehrere Linienabtaster einer opto-elektronischen, flächenhaft aufnehmenden Kamera oder einer Kombination solcher Kameras zugeordnet. Durch einander überdeckende Flächen-Einzelaufnahmen der Kamera wird hierbei ein Blockausgleich bzw. die Selbstorientierungsfähigkeit für den oder die Linienabtaster hergestellt.

Ferner werden zum Blockausgleich bzw. für die Selbstorientierung empfindliche Zonen in Form von flächenhaften Teilbildern in dem sich überdeckenden Bereich von benachbarten Einzelaufnahmen innerhalb der Flächen- oder 2D-Kamera verwendet, deren Daten dann für eine Blockbildung benötigt werden. Somit muß auf keinen Fall der gesamte Bildinhalt jeder einzelnen Flächenaufnahme ausgewertet werden. Vielmehr genügen die Daten von beispielsweise fünf, in den sich überdeckenden Bereichen in einem möglichst großen Winkelabstand von einander angeordneten Teilbildern in der Kamera-Fokalebene; die minimale Größe dieser Teilbilder ergibt sich aus den Anforderungen hinsichtlich der digitalen Bildkorrelation.

Eine Übertragung, d.h. eine Zuordnung der Orientierungsdaten von der flächenhaft aufnehmenden Flächen- oder 2D-Kamera auf den oder die Linienabtaster erfolgt durch festes Ausrichten oder Messen der relativen Ausrichtung auf die Linienabtaster sowie ferner durch eine zeitliche Zuordnung der beiden Datenströme, was beispielsweise durch einen gemeinsamen Zeitkode sichergestellt sein kann.

Bei dem erfindungsgemäßen Verfahren wird durch ein in regelmäßigen Zeitabständen durchgeführtes Belichten eine Serie von sich überdeckenden Einzelbildern mit Hilfe der opto-elektronischen Flächenkamera hergestellt. Hierbei hängt die Häufigkeit der Einzelaufnahmen sowie die Größe der für eine Bildkorrelation auszuwertenden "Fensterbereiche" in Form der erwähnten Teilbilder im wesentlichen von der Trägerdynamik sowie von dem zu erfassenden Geländetyp ab.

Durch die Bildkorrelation werden dann jeweils mindestens drei gemeinsame Bildpunkte oder -zonen in dem Überdeckungsbereich eines Bildpaares, d.h. in dem sogenannten Fensterbereich, ermittelt. Hierbei kann die gegenseitige Orientierung eines Bildverbandes mit einem der üblichen Standardverfahren des photogrammetrischen Blockausgleichs erfolgen.

Die Orientierung des oder der Linienabtaster ergibt sich unmittelbar für alle Belichtungszeitpunkte mittels der flächenhaft aufnehmenden Kamera. In dem Zeitraum zwischen den einzelnen Belichtungen kann dann der Linienabtaster relativ zu den Flächenbildern durch eine Bildkorrelation in erheblich feineren Intervallen orientiert werden. Diese Orientierung ist für stereoskopische Linienabtaster eindeutig. Bei monoskopischen Abtastern werden für eine Feinorientierung jedoch noch zusätzliche Interpolationsmodelle benötigt.

Besonders vorteilhaft bei den erfindungsgemäßen Verfahren sowie den Einrichtungen zur Durchführung dieser Verfahren ist, daß sie technisch einfach und damit entsprechend schnell realisierbar sind, und daß die hierzu benötigte Software bereits vorhanden und sogar weit verbreitet ist.

Ferner sind in dem erfindungsgemäßen Verfahren und auch in den Einrichtungen zur Durchführung des Verfahrens die Vorteile von Linienabtastern und Flächenkameras so kombiniert, daß sowohl die Verfahren als auch die Einrichtungen weitgehend frei von den Linienabtastern bzw. Flächenkameras anhaftenden Nachteilen sind.

Obendrein wird bei der Erfindung von vornherein opto-elektronisch digital gearbeitet. Somit ist eine An-Bord-Datenverarbeitung in beinahe Echtzeit erreichbar. Darüber hinaus kann das erfindungsgemäße Verfahren der "Bildnavigation" auch zur Bahn- und Lageregulierung des Trägers, insbesondere für den Linienabtaster beitragen. Darüber hinaus ist bei dem erfindungsgemäßen Verfahren im Verhältnis zu dem Datenstrom des oder der Linienabtaster nur eine sehr geringe zusätzliche Datenrate erforderlich.

Nachfolgend wird eine bevorzugte Ausführungsform der Erfindung anhand der Figuren beschrieben. Es zeigen:

Fig.1    eine schematische Darstellung einer herkömmlichen, gegenseitigen Orientierung von zwei Zeilentripeln eines dreifach stereoskopischen Zeilenabtasters unter Idealbedingungen;

Fig.2    eine Darstellung einer Ausbildung eines nichtplanaren Segmenttripels durch eine lineare Interpolation zwischen zwei gegeneinander verdrehten Zeilentripeln als kleinste Einheit eines zweidimensionalen Teilbildes bei einer kontinuierlichen Bildaufnahme eines dreifach stereoskopischen Linienabtasters;

Fig.3    eine schematische Darstellung von Zeilendetektoren und diesen in einer gemeinsamen Fokalebene einer Optik zugeordneten Flächendetektoren sowie

Fig.4    eine schematische Darstellung einer relativen Verschiebung und Orientierung von zwei nacheinander von einer Kamera nach Fig.3 aufgenommenen Einzelaufnahmen.

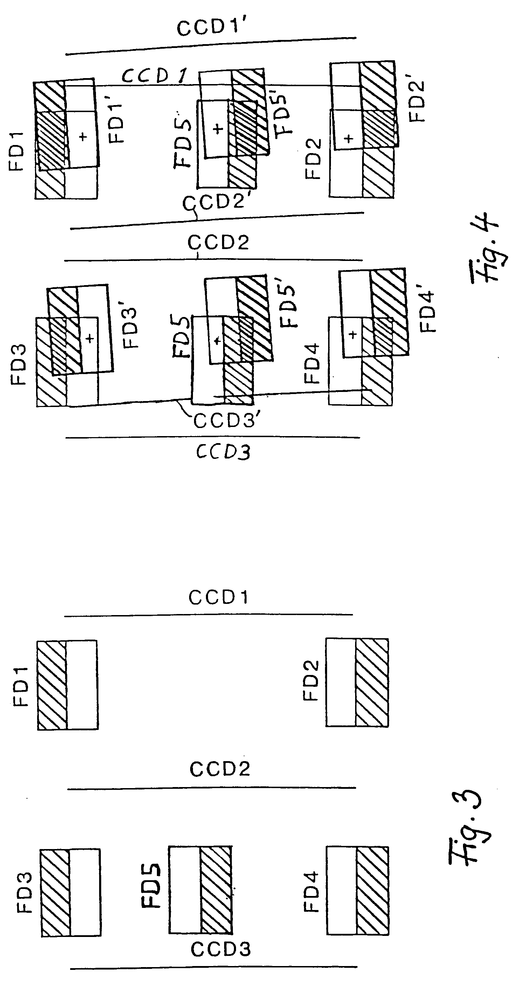

In Fig.3 und 4 ist eine bevorzugte Ausführungsform einer Einrichtung zur Durchführung des erfindungsgemäßen Verfahrens dargestellt, durch das ein in dem eingangs erwähnten MEOSS-Projekt der Anmelderin verwendeter, dreifach-stereoskopischer Linienabtaster ergänzt ist.

Hierbei sind drei CCD-Zeilendetektoren CCD1 bis CCD3, welche beispielsweise jeweils 3456 Elemente aufweisen, parallel zueinander ausgerichtet in der Fokalebene eines nicht dargestellten, gemeinsamen Objektivs einer flächenhaft aufnehmenden Kamera angeordnet. Zwischen den drei Zeilendetektoren CCD1 bis CCD3 sind fünf zusätzliche Flächendetektoren FD1 bis FD5 vorgesehen, von welchen vier Flächendetektoren FD1 bis FD4 in Form eines Rechtecks angeordnet sind. Die fünf Flächendetektoren FD1 bis FD5 sind teilweise i.a. mindestens zur Hälfte, vorzugsweise zu mehr als der Hälfte abgedunkelt.

Bei jeder flächenhaften Einzelaufnahme werden die nicht-abgedunkelten Teilflächen der fünf Flächendetektoren FD1 bis FD5 elektronisch simultan, kurzzeitig belichtet. Der Bildinhalt der einzelnen, etwa zur Hälfte abgedunkelten Flächendetektoren wird sofort in deren abgedunkelte Bereiche verschoben, dort gespeichert und dann mit einer konstanten, niedrigen Datenrate ausgelesen.

Die Verschiebungen und damit die relative Orientierung der nächsten Einzelaufnahme erfolgt über fünf jeweils durch ein Kreuz gekennzeichnete Vergleichspunkte in den sich überdeckenden Teilbereichen der einzelnen Flächendetektoren FD1 bis FD5 bzw. FD1′ bis FD5′ (wobei durch den Abostroph die bei der nächsten Einzelaufnahme in der Fig.4 nach rechts verschobene Anordnung angezeigt ist).

Nachstehend wird noch kurz ein Vergleich der erforderlichen bzw. benötigten Datenraten vorgenommen. Wenn Linien- und Flächensensoren bzw. -detektoren gleicher Rasterweite angenommen werden, so ergibt sich für beide Sensoren die gleiche Zeilenfrequenz. Für eine Bildkorrelation genügt eine Höhe, d.h. eine Spaltenzahl, von 20 auf dem jeweiligen Flächendetektor im Verhältnis zu 3456 Spalten pro CCD-Zeilendetektor.

Wenn ferner in Flugrichtung ein Überdeckungsgrad von 50%, d.h. von 0,5 für die Flächenaufnahmen angesetzt wird, so ergeben sich folgende Datenraten:

Für den Linienabtaster:

3 Sensoren mit jeweils 3456 Bildelementen bzw. Pixel (Spalten) mal der Zeilenfrequenz;

Für die Flächenkamera:

Fünf (5) Sensoren mit 20 Spalten mal Zeilenfrequenz/Überlappungsgrad.

Damit wird dann das Verhältnis der Datenraten zwischen der flächenhaft aufnehmenden Kamera und den Zeilendetektoren:

$$\frac{5 \times 20}{3 \times 3456 \times 0,5} = 0{,}0193,$$

d.h. von 2 %.

Zu einer Abdeckung größerer Lageschwankungen können höhere Spaltenzahlen auf den Flächen-CCD's genutzt werden.

Außer zur Fernerkundung der Erde vom Flugzeug oder Satelliten aus können die erfindungsgemäßen Verfahren sowie Einrichtungen zur Durchführung des Verfahrens in vorteilhafter Weise auch beispielsweise zur Überwachung und Steuerung von industriellen Vortriebsprozessen eingesetzt werden.

## Patentansprüche

1. Verfahren zur Fernerkundung der Erde vom Flugzeug oder Satelliten aus, mit Hilfe von Linienabtastern, bei welchem
mittels einer einem oder mehreren Linienabtastern zugeordneten, opto-elektronischen, flächenhaft aufnehmenden Kamera oder einer Kombination solcher Kameras in regelmäßigen Zeitabständen eine Serie von einander überdeckenden Einzelaufnahmen angefertigt wird,
ferner jeweils die Positionen korrespondierender Bildpunkte oder Bildzonen, sog. Teilbilder, in dem sich überdeckenden Bereich von benachbarten einzelnen Flächenaufnahmen zur gegenseitigen Orientierung der Aufnahmepositionen der Flächenkamera(s) ausgewählt werden, und
schließlich die Orientierungsdaten von der (den) opto-elektronischen Flächen-Kamera(s) durch festes Ausrichten oder Messen der relativen Ausrichtung auf die Linienabtaster unterstützt durch eine zeitliche Zuordnung beider Datenströme übertragen werden.

2. Verfahren nach Anspruch 1, dadurch **gekennzeichnet**, daß eine flächenhafte Aufnahme aus einzelnen Teilbildern besteht, die im Abstand voneinander angeordnet sind, um so eine hohe Genauigkeit der gegenseitigen Orientierung zu erhalten.

3. Verfahren nach Anspruch 1, dadurch **gekennzeichnet**, daß zur Orientierung von größeren Verbänden von Linienabtasteraufnahmen die Flächenaufnahmen im Sinne einer photogrammetrischen Blockausgleichung verwendet werden.

4. Verfahren nach Anspruch 1, dadurch **gekennzeichnet**, daß der oder die Linienabtaster auf dem Bildverband aus Flächenaufnahmen durch Bildkorrelation kontinuierlich orientierbar sind.

5. Verfahren nach Anspruch 1, dadurch **gekennzeichnet**, daß die Orientierungsfähigkeit der flächenhaft aufnehmenden Kamera zur Lage- und Bahn-Regelung des Kameraträgers verwendet wird, um dadurch insbesondere eine Bildüberdeckung für Linienabtaster zu erreichen, deren Abtastzeilen in der Fokalebene versetzt sind.

6. Verfahren nach einem der vorhergehenden Ansprüche, dadurch **gekennzeichnet**, daß die Erzeugung überdeckender Einzelaufnahmen nach Aufnahmezeitpunkt und Position der in der (den) Kamera(s) aktivierten Sensorflächen in Abhängigkeit von einer Bahn- und Lageinformation des Kameraträgers gesteuert wird.

7. Einrichtung zur Durchführung des Verfahrens nach einem der Ansprüche 1 bis 6, dadurch **gekennzeichnet**, daß als Linienabtaster dienende CCD-Zeilendetektoren (CCD1 bis CCD3) zusammen mit zusätzlichen Flächendetektoren (FD1 bis FD5) in der Fokalebene eines gemeinsamen Objektivs einer opto-elektronischen, flächenhaft aufnehmenden Kamera angeordnet sind.

8. Einrichtung nach Anspruch 7, dadurch **gekennzeichnet**, daß die vorgesehenen Flächendetektoren (FD1 bis FD4) über das gemeinsame Kamera-Objektiv und über Spiegel oder Strahlteiler belichtbar sind.

9. Einrichtung nach einem der Ansprüche 7 oder 8, dadurch **gekennzeichnet**, daß die zusätzlichen Flächendetektoren (FD1 bis FD4) teilweise abgedunkelt sind, um sie als Bildspeicher zu verwenden.

## Claims

1. Method for remote earth reconnaissance from an aircraft or satellite with the aid of line scanners in which
by means of an opto-electronic area camera taking still pictures or a combination of such cameras associated with one or more line scanners at regular intervals of time a series of individual exposures overlapping each other is made,
furthermore the respective positions of corresponding image points or image zones, so-called partial images, in the overlapping region of adjacent individual still pictures are selected for mutual orientation of the pickup positions of the area camera(s), and

finally the orientation data of the opto-electronic area camera(s) are transmitted by fixed alignment or measurement of the relative alignment to the line scanners assisted by a time association of the two data streams.

2. Method according to claim 1, characterized in that an area picture consists of individual subimages which are arranged spaced from each other in order to obtain a high accuracy of the mutual orientation.

3. Method according to claim 1, characterized in that for orientation of relatively large groups of line scanner shots the area pictures are used in the sense of a photogrammetric block equalization

4. Method according to claim 1, characterized in that the line scanner or scanners can be continuously orientated to the image group of area pictures by image correlation.

5. Method according to claim 1, characterized in that the orientation capability of the area camera taking still pictures is employed for positon and track control of the camera carrier to achieve thereby in particular an image overlapping for line scanners having scanning lines offset in the focal plane.

6. Method according to any one of the preceding claims, characterized in that the generation of overlapping individual pictures is controlled as regards exposure instant and position of the sensor surfaces activated in the camera(s) in dependence upon a track and position information of the camera carrier.

7. Apparatus for carrying out the method according to any one of claims 1 to 6, characterized in that CCD line detectors (CCD1 to CCD3) serving as line scanners are arranged together with additional area detectors (FD1 to FD5) in the focal plane of a common objective of an opto-electronic area camera.

8. Apparatus according to claim 7, characterized in that the area detectors (FD1 to FD4) provided can be exposed via the common camera objective and via mirrors or beam splitters.

9. Apparatus according to any one of claims 7 or 8, characterized in that the additional area detectors (FD1 to FD4) are partially darkened in order to use them as image memory.

## Revendications

1. Procédé de téléreconnaissance de la terre à partir d'un avion ou d'un satellite à l'aide d'analyseurs de lignes, dans lequel

on prépare au moyen d'une caméra optoélectronique associée à un ou plusieurs analyseurs de lignes effectuant des prises de vue de surface, ou une combinaison de telles caméras, à des intervalles de temps réguliers, une série de prises de vue individuelles en chevauchement,

on sélectionne ensuite les positions de points d'image ou de zones d'image correspondantes, dites images partielles, dans la zone en chevauchement de vues de surface individuelles et voisines pour l'orientation mutuelle des positions de prise de vue de la ou des caméras de surface; et

finalement on transmet les données d'orientation de la ou des caméras de surface optoélectroniques par un alignement fixe ou par une mesure de l'orientation relative sur les analyseurs de lignes, ce qui est facilité par une association dans le temps des deux courants de données.

2. Procédé selon la revendication 1, caractérisé en ce qu'on obtient une vue en surface à partir d'images partielles individuelles qui sont disposées à une certaine distance les unes des autres de manière à obtenir une précision élevée de l'orientation mutuelle.

3. Procédé selon la revendication 1, caractérisé en ce que pour orienter des bandes importantes de prises de vues provenant des analyseurs de lignes, on utilise les vues de surface dans le sens d'une compensation photogrammétrique de blocs.

4. Procédé selon la revendication 1, caractérisé en ce que le ou les analyseurs de lignes peuvent être orientés de façon continue sur la bande d'images constituée par les vues de surface par une corrélation entre images.

5. Procédé selon la revendication 1, caractérisé en ce que la capacité d'orientation de la caméra effectuant des prises de vue de surface est utilisée pour la régulation de la position et de la trajectoire du porteur de la caméra, de manière à obtenir en particulier un recouvrement des images pour les analyseurs de lignes, dont les lignes explorées sont décalées dans le plan focal.

6. Dispositif selon l'une quelconque des revendications précédentes, caractérisé en ce que la production de vues individuel les en recouvrement en fonction du point dans le temps des prises de vue et de la position des surfaces des capteurs activés dans la (ou les) caméras est commandée en fonction d'une information de trajectoire et de position du porteur de la ou des caméras.

7. Dispositif pour la mise en oeuvre du procédé selon l'une quelconque des revendications 1 à 6, caractérisé en ce que l'on dispose des détecteurs de ligne CCD (CCD1 à CCD3) servant d'analyseurs de lignes en me'me temps que des détecteurs de surface additionnels (FD1 à FD5) dans le plan focal d'un objectif commun d'une caméra optoélectronique prenant des vues de surface.

8. Dispositif selon la revendication 7, caractérisé en ce que les détecteurs de surface prévus (FD1 à FD4) peuvent être éclairés par l'objectif commun de la caméra et par un miroir ou un diviseur de faisceau.

9. Dispositif selon la revendication 7 ou 8, caractérisé en ce que des détecteurs de surface additionnels (FD1 à FD4) sont partiellement obscurcis pour être utilisés en tant que mémoires d'image.

EP 0 326 128 B1

$(0, y_i/c, -1)_f$     $(0, y_i/c, -1)_v$     $(0, y_i/c, -1)_a$

$Z_t$

$Y_t$

$X_t$

*Fig. 1*

Fig. 2

Fig. 4

Fig. 3